# EUROPEAN PATENT APPLICATION

(11) **EP 4 791 046 A1**
(43) Date of publication of application: **12.08.2026**
(21) Application number: 24895303.6
(22) Date of filing: 29.01.2024
(51) Int. Cl.: H04S 7/00, G06F 3/0481

(54) **MULTI-STREAM AND MULTI-PARTITION INTERACTION METHOD AND SYSTEM, AND STORAGE MEDIUM**

(30) Priority: 27.11.2023 CN 202311590312
(71) Applicant: Hansong (Nanjing) Technology Limited, Nanjing, Jiangsu 211106 (CN)
(72) Inventor: CHEN, Yang, Nanjing, Jiangsu 211106 (CN); KE, Mengling, Nanjing, Jiangsu 211106 (CN); YUAN, Fanjie, Nanjing, Jiangsu 211106 (CN); ZHOU, Bin, Nanjing, Jiangsu 211106 (CN); XU, Yue, Nanjing, Jiangsu 211106 (CN); MA, Min, Nanjing, Jiangsu 211106 (CN); PAN, Yingbo, Nanjing, Jiangsu 211106 (CN); YAN, Boshen, Nanjing, Jiangsu 211106 (CN)
(74) Representative: Dai, Simin
(86) International application number: PCT/CN2024/074439
(87) International publication number: WO 2025/112189

(57) **Abstract**

A method, a system for multi-stream multi-zone interaction, and a non-transitory computer-readable storage medium are provided. The method includes: acquiring an audio source service item, a floor plan of a target region, and a device layout diagram, wherein the audio source service item includes an audio source and an audio source type; determining a zone to be configured corresponding to a playback device based on the floor plan and the device layout diagram; in response to an application operation on the audio source service item, determining at least one of a paired zone corresponding to the audio source service item or an application mode of the audio source service item in the paired zone; wherein the paired zone is the zone to be configured that has a pairing relationship with the audio source service item, and the application mode includes direct application or a mixing operation.

## Description

### CROSS-REFERENCE TO RELATED APPLICATIONS

This application claims priority to Chinese Patent Application No. 202311590312.8, filed on November 27, 2023, the entire contents of which are incorporated herein by reference.

### TECHNICAL FIELD

The present disclosure generally relates to a field of multimedia playback technology, and in particular to a method, a system, and a storage medium for multi-stream multi-zone interaction.

### BACKGROUND

A plurality of terminal playback devices are configured in each region of some specific spaces (e.g., shopping malls, home spaces, exhibition venues, conference halls, etc.). Due to different audio playback requirements, the plurality of terminal devices need to be grouped into zones and audio sources need to be configured according to playback requirements to play a user-specified audio source/video source in each zone. The traditional audio source configuration is generally performed in a list form, and the operation process is not flexible enough, and operations such as addition, deletion, modification, and query are relatively cumbersome. Traditional grouping and zoning are also generally performed in a list form and cannot effectively zone in combination with physical locations of devices, which is not convenient, intuitive, and provides bad user experiences.

Therefore, there is a need to provide a method for multi-stream multi-zone interaction, which, through a simple interaction method, makes audio source configuration operations flexible and convenient, and simultaneously makes zone operations more intelligent and intuitive, thereby improving user experiences.

### SUMMARY

One or more embodiments of the present disclosure provide a method for multi-stream multi-zone interaction. The method includes: acquiring an audio source service item, a floor plan of a target region, and a device layout diagram, wherein the audio source service item includes an audio source and an audio source type; determining a zone to be configured corresponding to a playback device based on the floor plan or the device layout diagram; in response to an application operation on the audio source service item, determining at least one of a paired zone corresponding to the audio source service item or an application mode of the audio source service item in the paired zone; wherein the paired zone is the zone to be configured having a pairing relationship with the audio source service item, and the application mode includes a direct application or a mixing operation.

One or more embodiments of the present disclosure provide a system for multi-stream multi-zone interaction. The system includes: an acquisition module configured to acquire an audio source service item, a floor plan of a target region, and a device layout diagram, wherein the audio source service item includes an audio source and an audio source type; a first determination module configured to determine a zone to be configured corresponding to a playback device based on the floor plan or the device layout diagram; a second determination module configured to, in response to an application operation on the audio source service item, determine at least one of a paired zone corresponding to the audio source service item or an application mode of the audio source service item in the paired zone; wherein the paired zone is the zone to be configured having a pairing relationship with the audio source service item, and the application mode includes a direct application or a mixing operation.

One or more embodiments of the present disclosure provide a non-transitory computer-readable storage medium. The non-transitory computer-readable storage medium stores computer instructions. When a computer reads the computer instructions in the non-transitory computer-readable storage medium, the computer executes the method for multi-stream multi-zone interaction.

One or more embodiments of the present disclosure at least include the following beneficial effects: determining the zone to be configured corresponding to the playback device based on the floor plan or the device layout diagram, and determining at least one of the paired zone corresponding to the audio source service item or the application mode of the audio source service item in the paired zone in response to the application operation on the audio source service item can reduce operation steps for audio source configuration, enabling the user to interact more flexibly to configure the audio source service item and the terminal device.

### BRIEF DESCRIPTION OF THE DRAWINGS

The present disclosure is further described in an exemplary manner through embodiments. These exemplary embodiments are described in detail with reference to the drawings. These embodiments are not restrictive. In these embodiments, the same reference numerals denote the same structures, wherein:
FIG. 1 is a schematic diagram of an application scenario of a system for multi-stream multi-zone interaction according to some embodiments of the present disclosure.
FIG. 2 is a block diagram of an exemplary system for multi-stream multi-zone interaction according to some embodiments of the present disclosure.
FIG. 3 is a flowchart of an exemplary process for multi-stream multi-zone interaction according to some embodiments of the present disclosure.
FIG. 4 is a schematic diagram of an exemplary process for determining a zone to be configured corresponding to a playback device based on a device layout diagram according to some embodiments of the present disclosure.
FIG. 5 is a schematic diagram of another exemplary determination of a zone to be configured corresponding to a playback device based on a device layout diagram according to some embodiments of the present disclosure.
FIG. 6 is a schematic diagram of an exemplary process for determining a paired zone corresponding to an audio source service item and/or an application mode of the audio source service item in the paired zone according to some embodiments of the present disclosure.
FIG. 7 is a schematic diagram of another exemplary determination of a paired zone corresponding to an audio source service item and/or an application mode of the audio source service item in the paired zone according to some embodiments of the present disclosure.
FIG. 8 is a schematic diagram of a exemplary process for determining an application mode according to some embodiments of the present disclosure.

### DETAILED DESCRIPTION

To more clearly describe technical solutions of the embodiments of the present disclosure, a brief introduction will be made to accompanying drawings to be used in embodiment description below. Obviously, the accompanying drawings in the description below are merely some examples or embodiments of the present disclosure, and for a person of ordinary skill in the art, without making inventive efforts, the present disclosure may also be applied to other similar scenarios based on these accompanying drawings. Unless otherwise apparent from the context or otherwise specified, the same reference numerals in figures represent the same structure or operation.

It should be understood that the 'system', 'apparatus', 'unit', and/or 'module' as used herein is a manner of distinguishing different components, elements, parts, portions, or assemblies at different levels. However, if other words can achieve the same purpose, the words may be replaced by other expressions.

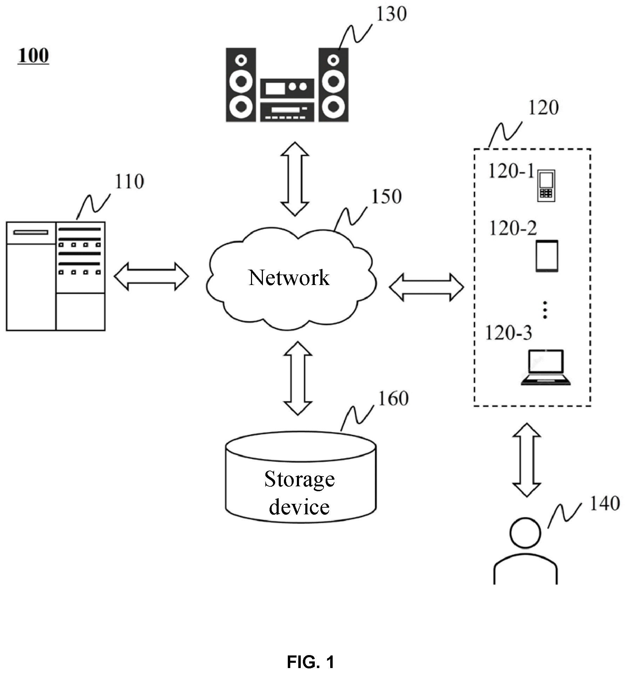

FIG. 1 is an application scenario diagram illustrating a system for multi-stream multi-zone interaction according to some embodiments of the present disclosure.

In some embodiments, as shown in FIG. 1, an application scenario 100 of the system for multi-stream multi-zone interaction may include a processor 110, a terminal device 120, a playback device 130, a user 140, a network 150, and a storage device 160.

The processor 110 is configured for processing information and/or data related to the application scenario 100. In some embodiments, the processor 110 may process the data and/or the information obtained from other devices or system components. The processor 110 may execute program instructions based on the data, the information, and/or processing results to perform one or more functions described in the embodiments of the present disclosure. For example, by executing a process for multi-stream multi-zone interaction disclosed in the present disclosure, the processor 110 may determine a zone to be configured corresponding to a playback device, and determine a paired zone corresponding to an audio source service item and/or an application mode of the audio source service item in the paired zone. Exemplarily, the processor 110 may acquire an audio source service item, a floor plan of a target region, and a device layout diagram; determine a zone to be configured corresponding to the playback device 130 based on the floor plan or the device layout diagram; and in response to an application operation on the audio source service item, determine a paired zone corresponding to the audio source service item and/or an application mode of the audio source service item in the paired zone.

In some embodiments, the processor 110 may include one or more sub-processing devices (e.g., a single-core processing device or a multi-core multi-chip processing device). Merely by way of example, the processor 110 may include a Central Processing Unit (CPU), an Application-Specific Integrated Circuit (ASIC), an Application-Specific Instruction-set Processor (ASIP), a Graphics Processing Unit (GPU), a Digital Signal Processor (DSP), a microprocessor, or the like, or any combination thereof. In some embodiments, the processor 110 may be implemented on a cloud platform. Merely by way of example, the cloud platform may include a private cloud, a public cloud, a hybrid cloud, a community cloud, a distributed cloud, an internal cloud, a multilayer cloud, or the like, or any combination thereof.

The terminal device 120 refers to one or more devices or software used by the user 140. The user 140 may be an operator who performs audio source playback control. The user 140 may interact via the terminal device 120 and the system for multi-stream multi-zone interaction. In some embodiments, the terminal device 120 may include one of a mobile device 120-1, a tablet computer 120-2, a laptop computer 120-3, or the like, or any combination thereof, or other devices having input and/or output functions. In some embodiments, the processor 110 may be a part of the terminal device 120.

In some embodiments, the terminal device 120 may include an interactive interface. The interactive interface refers to an interface for the user 140 to interact with the system for multi-stream multi-zone interaction. For example, the interactive interface may be a touch screen, a display screen, or the like. In some embodiments, the user 140 may interact through the interactive interface of the terminal device 120 and other components of the system for multi-stream multi-zone interaction (e.g. the processor 110, the playback device 130, or the like). For example, the processor 110 may, in response to a drag operation of the user 140 on the playback device 130 on the interactive interface of the terminal device 120, determine the zone to be configured corresponding to the playback device 130. For another example, in response to a link operation of the user 140 on the playback device 130 on the interactive interface of the terminal device 120, the processor 110 may determine the zone to be configured corresponding to the playback device 130.

The playback device 130 refers to a device for playing audio sources. For example, the playback device 130 may include, but is not limited to, speaker devices applied in shopping malls and homes, and products that can use voice playback functions (e.g. smart refrigerators, car speakers, or the like). The type of playback device is not limited herein. In some embodiments, the playback device 130 may be connected to the network 150 to communicate with one or more components of the application scenario 100.

The network 150 may facilitate an exchange of information and/or data. The network 150 enables communication between various components and with other parts outside the system, facilitating the exchange of data and/or information. In some embodiments, one or more components of the application scenario 100 (e.g., the processor 110, the terminal device 120, the storage device 160) may send information and/or data to other components of the application scenario 100 via the network 150. For example, the processor 110 may, via the network 150, acquire a gesture operation of the user 140 or the like from the terminal device 120.

In some embodiments, the network 150 may include any one or more of a wired network or a wireless network. In some embodiments, the network 150 may include a cable network, an optical fiber network, the Internet, a Bluetooth network, or the like, or any combination thereof. In some embodiments, a network connection between various components in the application scenario 100 may adopt one of the aforementioned manners or a plurality of manners. In some embodiments, the network 150 may be various topological structures such as point-to-point, shared, centralized, or the like, or a combination of a plurality of topological structures.

The storage device 160 may be used for storing data, instructions, and/or any other information. In some embodiments, the storage device 160 may store the data and/or information in a processing process of the processor 110. For example, the storage device 160 may store a floor plan, a device layout diagram, a zone to be configured, an instruction input template, or the like. The storage device 160 may include one or more storage components, and each storage component may be an independent device or a part of other devices. In some embodiments, the storage device 160 may include a Random Access Memory (RAM), a Read Only Memory (ROM), a removable memory, or the like, or any combination thereof. In some embodiments, the storage device 160 may be connected to the network 150 to achieve communication with one or more components in the application scenario 100. In some embodiments, the storage device 160 may be implemented on a cloud platform. In some embodiments, the storage device 160 may be integrated or included in one or more other components of the application scenario 100 (e.g., the processor 110, the terminal device 120).

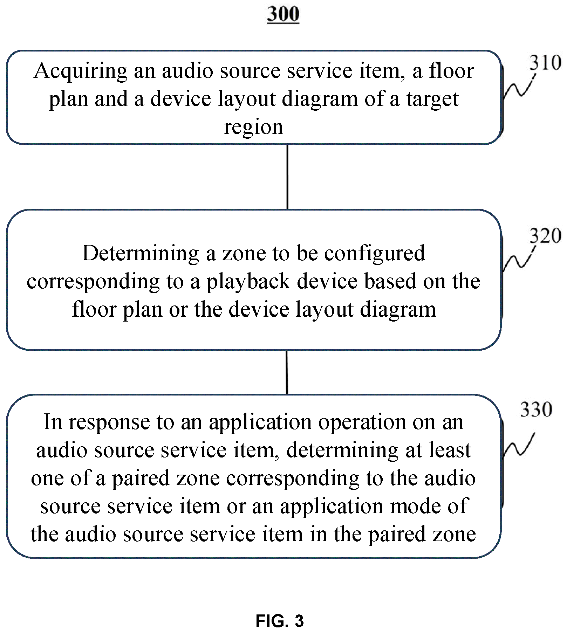

More descriptions regarding related parameters such as user characteristics, the floor plan, the device layout diagram, the zone to be configured, and the instruction input template may be referred to in related description of FIGS. 3-8.

It should be noted that the application scenario 100 of the system for multi-stream multi-zone interaction is provided for illustration purposes only and is not intended to limit the scope of the present disclosure. To one of ordinary skill in the art, various changes and modifications may be made based on the description of the present disclosure. For example, the application scenario 100 of the system for multi-stream multi-zone interaction may further include a database, an information source, or the like. For example, the application scenario 100 of the system for multi-stream multi-zone interaction can implement similar or different functions on other devices. However, these changes and modifications will not depart from the scope of the present disclosure.

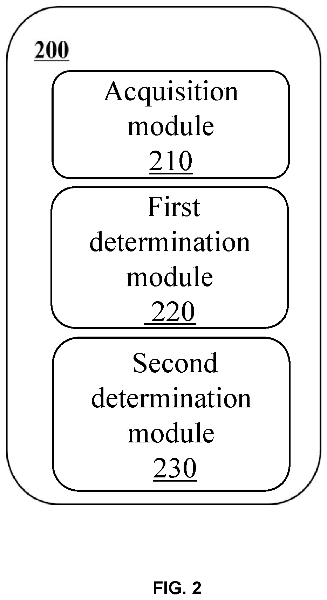

FIG. 2 is a block diagram illustrating an exemplary system for multi-stream multi-zone interaction according to some embodiments of the present disclosure. In some embodiments, as shown in FIG. 2, the system for multi-stream multi-zone interaction 200 may include an acquisition module 210, a first determination module 220, and a second determination module 230. In some embodiments, the acquisition module 210, the first determination module 220, and the second determination module 230 may be implemented based on the processor 110.

In some embodiments, the acquisition module 210 is configured to acquire an audio source service item, a floor plan of a target region, and a device layout diagram.

In some embodiments, the first determination module 220 is configured to determine a zone to be configured corresponding to a playback device based on the floor plan or the device layout diagram.

In some embodiments, the first determination module 220 is further configured to, in response to a zone operation, determine the zone to be configured corresponding to the playback device based on the floor plan or the device layout diagram.

In some embodiments, the first determination module 220 is further configured to determine the zone to be configured corresponding to the playback device.

In some embodiments, in response to the drag operation of the user on the playback device on the interactive interface of the terminal device, the first determination module 220 is further configured to, in response to the link operation of the user on the playback device on the interactive interface of the terminal device, determine the zone to be configured corresponding to the playback device.

In some embodiments, in response to an application operation on the audio source service item, the second determination module 230 is configured to determine a paired zone corresponding to the audio source service item and/or an application mode of the audio source service item in the paired zone.

In some embodiments of the present disclosure, the second determination module 230 is further configured to determine the paired zone corresponding to the audio source service item based on the gesture operation of the user on the audio source service item; and/or determine the application mode of the audio source service item in the paired zone based on at least one of the gesture operation of the user on the audio source service item, a time for performing the gesture operation, the audio source type of the audio source service item, or a position where the user drags the audio source service item into the paired zone.

In some embodiments of the present disclosure, the second determination module 230 is further configured to acquire a user input command based on the audio source service item, the zone to be configured, and an instruction input template; and determine the paired zone corresponding to the audio source service item based on the user input command.

In some embodiments of the present disclosure, the second determination module 230 is further configured to acquire an application scenario set; and determine the application mode of the audio source service item in the paired zone based on the application scenario set, the audio source service item, and the paired zone corresponding to the audio source service item.

In some embodiments of the present disclosure, in response to a duration between a setup time of the application scenario set and a current time being greater than a duration threshold, the second determination module 230 is further configured to determine at least one recommended application mode of the audio source service item in the paired zone based on the paired zone corresponding to the audio source service item; and determine the application mode of the audio source service item in the paired zone based on the at least one recommended application mode.

In some embodiments of the present disclosure, the second determination module 230 is further configured to determine a frequent mixing itemset of at least one of the zone to be configured corresponding to a plurality of playback devices based on historical data; and determine the at least one recommended application mode based on the frequent mixing itemset of at least one of the zone to be configured, the audio source service item, and the paired zone corresponding to the audio source service item.

In some embodiments of the present disclosure, the second determination module 230 is further configured to determine a dragging time based on the user characteristic.

More descriptions regarding the acquisition module 210, the first determination module 220, and the second determination module 230 may be referred to in the related descriptions of FIGS. 3-8.

It should be noted that the above description of the system for multi-stream multi-zone interaction 200 and the modules thereof is merely for convenience of description and is not intended to limit the present disclosure to the scope of the illustrated embodiments. It can be understood that, to one of ordinary skill in the art, after understanding the principle of the system, the respective modules may be arbitrarily combined, or subsystems may be formed to connect with other modules, without departing from the principle. In some embodiments of the present disclosure, the acquisition module 210, the first determination module 220, and the second determination module 230 disclosed in FIG. 2 may be different modules in the system or may be a single module implementing the functions of two or more of the above modules. For example, the respective modules may share a storage module, and the respective modules may each have their own storage modules. Such variations are within the protection scope of the present disclosure.

FIG. 3 is a flowchart illustrating an exemplary process for multi-stream multi-zone interaction according to some embodiments of the present disclosure. In some embodiments of the present disclosure, the process 300 may be performed by the processor 110 or a plurality of modules of the system for multi-stream multi-zone interaction 200 as shown in FIG. 2. As shown in FIG. 3, the process 300 includes the following steps.

In 310, acquiring an audio source service item, a floor plan and a device layout diagram of a target region.

The audio source service item refers to an item that provides audio source services. For example, the audio source service item may refer to an audio source specifically to be played in an audio and video playback scenario. In some embodiments of the present disclosure, the audio source service item includes an audio source and an audio source type. The audio source may include network audio sources and local audio sources, or the like. The network audio source may include Spotify, Airplay2, or the like, and the local audio source may include microphone voice, analog input, or the like. The audio source type may include voice, music, or the like. In some embodiments, different audio source types may be further classified depending on different music types.

In some embodiments of the present disclosure, the processor may acquire the audio source service item in a plurality of manners. For example, the processor may acquire the audio source service item by user preset settings. For example, the processor may read the audio source service item preset and stored by the user in the storage device. The user may preset audio source service items corresponding to different scenario types. For example, shopping mall scenarios, school activity scenarios, and meeting scenarios have different audio source service items.

The target region refers to a region where audio source configuration needs to be performed. For example, the target region includes shopping malls, exhibition venues, conference halls, home spaces, classrooms, or the like.

In some embodiments of the present disclosure, the floor plan includes a floor plan structure of the target region and a distribution position of playback devices. The distribution position of the playback devices on the floor plan corresponds to actual physical positions of the playback devices.

In some embodiments, the floor plan may be replaced at a preset period according to a preset pattern. The preset period refers to a period of repeated changes of replacement of the floor plan. The preset pattern refers to a pattern of changes of the floor plan within the period. The preset period and the preset pattern may be manually preset according to actual demands. For example, for a certain conference hall, the preset pattern specifies that from Monday to Friday, the conference hall is divided into four conference rooms, and from Saturday to Sunday, it is divided into two conference rooms (where the two conference rooms in the southeast and northeast are combined into one, and the two conference rooms in the southwest and northwest are combined into one). The processor may set a default shortcut for replacing the floor plan of the conference hall at a preset period of one week according to the preset pattern. This is to satisfy a situation where a layout structure of the target region follows a fixed pattern of changes and may improve utilization rate of devices and reduce complexity of manual operations.

In some embodiments of the present disclosure, the processor may acquire the floor plan of the target region in a plurality of manners. For example, the processor may acquire the floor plan by scanning the target region through a sensor. For example, the processor may acquire the floor plan by user input. For example, when the floor plan is replaced at the preset period according to the preset pattern, the processor may determine the floor plan of the target region based on the preset pattern.

In some embodiments, in response to the user requiring audio source configuration for the target region, the processor may acquire the floor plan of the target region. In some embodiments, the processor may display the floor plan on the interactive interface of the terminal device used by the user.

The device layout diagram refers to a map illustrating distribution locations of playback devices in the target region.

In some embodiments of the present disclosure, the device layout diagram includes a plurality of nodes and edges. The nodes of the device layout diagram may be playback devices, and different nodes correspond to different playback devices. Node characteristics may include a distribution location of a corresponding playback device. In some embodiments, the nodes within a same preset region may be connected by edges. The preset region may be a same actual physical region in the floor plan, such as the same floor, the same room, or the like. The preset region may also be a same zone to be configured. Edge characteristics may include a straight-line distance between distribution locations of playback devices. The straight-line distance may be a Euclidean distance between the distribution locations, or the like. The distribution location of the playback device on the device layout diagram corresponds to the relative physical position of the playback device. The relative physical position refers to a reference position of a playback position in the device layout diagram. For example, the processor may select any playback device in the target region as an origin. The processor may establish a Cartesian coordinate system by taking any two mutually perpendicular directions as an X-axis and a Y-axis. The coordinates in the Cartesian coordinate system may be relative physical positions of the playback devices, which is the distribution location of the playback devices on the device layout diagram.

In some embodiments of the present disclosure, the processor may construct the device layout diagram based on actual positions of playback devices. In some embodiments of the present disclosure, the processor may display the device layout diagram on the interactive interface of the terminal device used by the user.

More descriptions regarding the playback device, the terminal device, and the interactive interface may refer to FIG. 1 and its related description.

In 320, determining the zone to be configured corresponding to the playback device based on the floor plan or the device layout diagram.

The zone to be configured refers to a zone waiting to be configured with audio source service items and playback devices. In some embodiments of the present disclosure, the zone to be configured may include a combination of one or more sub-regions in the target region, thus making all devices operate independently without any grouping. In some embodiments of the present disclosure, the zone to be configured may further include a combination of portions of one or more sub-regions in the target region.

In some embodiments of the present disclosure, the zone to be configured may be a virtual region, rather than a region having actual physical meaning. For example, the processor may divide three devices in the target region into a group and create a virtual room for the group as the zone to be configured. For example, the processor may automatically create corresponding virtual rooms as zones to be configured based on partitions of an actual physical space of the target region.

In some embodiments of the present disclosure, the processor may determine the zone to be configured in a plurality of manners. For example, the processor may determine a preset zone as the zone to be configured. The preset zone may be pre-divided and determined based on user playback demands.

In some embodiments of the present disclosure, the processor may determine zones to be configured corresponding to respective playback devices in the target region, that is, making a one-to-one correspondence between the playback devices and the zones to be configured. Each playback device may be divided into a zone to be configured, and a zone to be configured may include one or more playback devices.

In some embodiments of the present disclosure, the processor may determine zones to be configured corresponding to playback devices in a plurality of manners. For example, the processor may automatically identify playback devices having the same link address (e.g., linking to the same Bluetooth, linking to the same Wi-Fi, or the like), and divide one or more playback devices having the same link address into a same zone to be configured.

In some embodiments of the present disclosure, the processor may determine the zone to be configured corresponding to the playback device based on the floor plan or the device layout diagram in response to the zone operation.

The zone operation refers to an operation of dividing playback devices in the target region into different zone groups. The zone operation may be performed by the user on the interactive interface of the terminal device. In some embodiments of the present disclosure, the zone operation may include the gesture operation of the user on the playback device. For example, a click operation on the playback device (e.g., a single click, a double click, or the like), a long press operation on the playback device, or the like.

In some embodiments of the present disclosure, the floor plan may be displayed on the interactive interface of the terminal device. Accordingly, the interactive interface may display a floor plan structure of the target region and distribution locations of playback devices.

In some embodiments of the present disclosure, the zone operation may include the gesture operation performed by the user on the playback device on the floor plan. In some embodiments of the present disclosure, the processor may determine the zone to be configured corresponding to the playback device in response to the gesture operation performed by the user on the playback device on the floor plan. The gesture operation performed on the playback device on the floor plan may include framing playback devices via a gesture, or the like.

In some embodiments of the present disclosure, in response to the user framing playback devices, the processor may determine a framed region as the zone to be configured corresponding to the playback devices within the framed region and associate the playback devices within the framed region with the zone to be configured. Framing includes using a polygon to frame playback devices via a gesture, or the like, to select the playback devices. The polygon may include a rectangle, a circle, or the like.

In some embodiments of the present disclosure, the floor plan may include initial zones of playback devices. The initial zone refers to a zone of playback devices before the user performs the gesture operation on the floor plan.

The initial zone may be determined based on an actual physical layout of playback devices in the target region. For example, in a home space, the initial zones on the floor plan may be different rooms or living areas where the terminal devices are located (e.g. a master bedroom, a secondary bedroom, a study, a living room, or the like). For example, in response to two playback devices being in the same room, the processor may divide the room into an initial zone and determine the initial zone as an initial zone corresponding to the two playback devices.

In some embodiments of the present disclosure, the processor may change the initial zone based on the zone operation of the user. The zone operation may include the gesture operation on the initial zone, such as deleting, adding, or moving playback devices in the initial zone by dragging via a gesture, to form a new zone. In some embodiments of the present disclosure, the processor may directly determine the new zone as the zone to be configured.

In some embodiments of the present disclosure, the processor may determine the zone to be configured corresponding to the playback device based on further operations of the user on the new zone. The further operations may include zone naming, Transmission (TX) path allocation, or the like. The TX path refers to a transmission path of an audio data stream (a data stream for real-time transmission of audio data).

In some embodiments of the present disclosure, the processor may perform zone naming and TX path allocation in a plurality of manners and determine the zone to be configured corresponding to the playback device. For example, in response to an operation of the user inputting a name for a zone on the terminal device, the processor may complete zone naming, and determine a zone having the same name as the zone to be configured corresponding to playback devices within the zone. For example, in response to the operation of the user allocating a TX path for a zone on the terminal device, the processor may complete the TX path allocation, and determine a zone having a same TX path as the zone to be configured corresponding to playback devices within the zone.

In some embodiments of the present disclosure, by performing further operations, such as modification, naming, or the like, on the initial zones formed based on the actual positions of the playback devices and the layout structure of the physical space where the playback devices are located, the efficiency of determining the zones to be configured may be improved, and effective zoning may be performed on the playback devices more conveniently and intuitively.

In some embodiments of the present disclosure, based on the device layout diagram, it may be determined that the zone to be configured corresponding to a playback device is applicable to a small-scale scenario, and corresponding playback operations may be performed through a mobile terminal. The small-scale scenario may include homes, companies, or the like.

In some embodiments of the present disclosure, based on the device layout diagram, it may be determined that the zone to be configured corresponding to a playback device is applicable to a large-scale scenario, and corresponding playback operations may be performed through a computer terminal or a mobile terminal. The large-scale scenario may include shopping malls, exhibition venues, or the like.

In some embodiments of the present disclosure, the user may adjust a floor plan structure of the target region, the number of playback devices (e.g., adding or removing playback devices), and the distribution position of playback devices on the interactive interface of the terminal device. In response to the adjustments of the user, the processor may adaptively adjust the zone to be configured to adapt to the adjustments of the user. For example, when the user merges two rooms of the target region on the interactive interface, the processor may automatically merge the zones to be configured corresponding to the two merged rooms into a single zone to be configured. For example, if the user adds a new playback device within a selection box region, the processor may automatically assign the newly added playback device to the selection box region and determine that the selection box region is the zone to be configured corresponding to the newly added playback device. For example, if the user adjusts a selection box region such that a certain selection box region covers another selection box region (wherein the covered selection box region is smaller), the processor may automatically assign the playback devices within the smaller covered selection box region to the larger selection box region, and determine that the larger selection box region is the zone to be configured corresponding to the playback devices within the larger selection box region. For example, if the user expands or shrinks a certain selection box region, the processor may automatically move the playback devices exceeding the selection box region out of the zone to be configured corresponding to the selection box region.

In some embodiments of the present disclosure, the device layout diagram may be displayed on the interactive interface of the terminal device. In some embodiments of the present disclosure, the zone operation may include the gesture operation of the user on the playback device on the device layout diagram. In some embodiments of the present disclosure, in response to the gesture operation of the user on the playback device on the device layout diagram, the processor may determine the zone to be configured corresponding to the playback device. The gesture operation on the playback device on the device layout diagram may include a single-finger long-press operation, a multi-finger long-press operation, or the like.

In some embodiments of the present disclosure, in response to a single-finger long-press operation of the user, the processor may determine the zone to be configured corresponding to the playback device subject to the single-finger long-press operation. For example, when the user performs a single-finger long-press operation on one of the playback devices of the device layout diagram, the processor may pop up a dialog box on the interactive interface of the terminal device, wherein the dialog box includes a plurality of zone selections, and the user may further click to select the zone to be configured corresponding to the playback device from the dialog box.

In some embodiments of the present disclosure, in response to a multi-finger long-press operation of the user, the processor may divide a plurality of playback devices on which the user simultaneously performs multi-finger long-press operations into a same group and automatically create the zone to be configured corresponding to the playback devices of the group. For example, if three fingers, such as the thumb, the index finger, and the middle finger, each simultaneously press three playback devices (after a pressing time exceeds a preset time, these three playback devices may be dragged), and the three pressed playback devices are simultaneously dragged into a certain region, then the region is the zone to be configured corresponding to the three playback devices. The preset time may be preset manually or by a system, such as 2 seconds, 3 seconds, or the like.

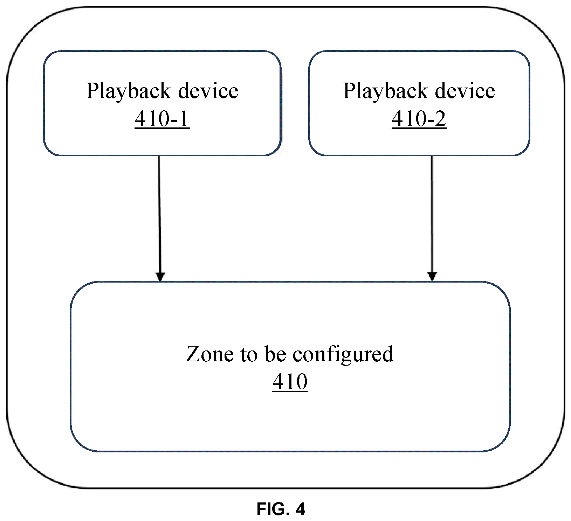

FIG. 4 is a schematic diagram of an exemplary process for determining a zone to be configured corresponding to a playback device based on a device layout diagram according to some embodiments of the present disclosure.

In some embodiments of the present disclosure, the gesture operation may include a drag operation on the playback device. Specifically, the gesture operation of the user on the playback device on the device layout diagram may include the drag operation on the playback device.

The drag operation refers to an operation of dragging the playback device into a certain region.

In some embodiments of the present disclosure, the processor may display the playback devices to be assigned and the zones to be configured in the device layout diagram on the terminal device of the user. For example, as shown in FIG. 4, the processor may display the playback devices to be assigned in a list form above the interactive interface of the terminal device, and display the zones to be configured below the interactive interface.

In some embodiments of the present disclosure, in response to the drag operation of the user on the playback device on the interactive interface of the terminal device, the processor may determine the zone to be configured corresponding to the playback device.

In some embodiments of the present disclosure, in response to the user dragging one or the plurality of playback devices to be assigned into the zone to be configured, the processor may automatically generate a corresponding relationship between the one or a plurality of playback devices to be assigned and the zone to be configured. As shown in FIG. 4, in response to the user dragging playback devices 410-1 and 410-2 into the zone to be configured 410, the processor may determine that the zone to be configured corresponding to playback devices 410-1 and 410-2 is the zone to be configured 410. The playback devices 410-1 and 410-2 may be simultaneously dragged into the zone to be configured 410 based on a multi-finger operation of the user, wherein each finger corresponds to one playback device.

In some embodiments of the present disclosure, in response to the user dragging the one or a plurality of playback devices to be assigned into the zone to be configured, the processor may automatically generate a corresponding relationship between the one or more playback devices to be assigned and the zone to be configured.

In some embodiments of the present disclosure, the playback devices for which the corresponding zones to be configured have been determined may not appear in a list of playback devices for determining the zone to be configured corresponding to the playback devices in a next round.

In some embodiments of the present disclosure, in response to the drag operation of the user on the playback device on the interactive interface of the terminal device, the zone to be configured corresponding to the playback device may be determined in an intuitively visual and convenient operation manner.

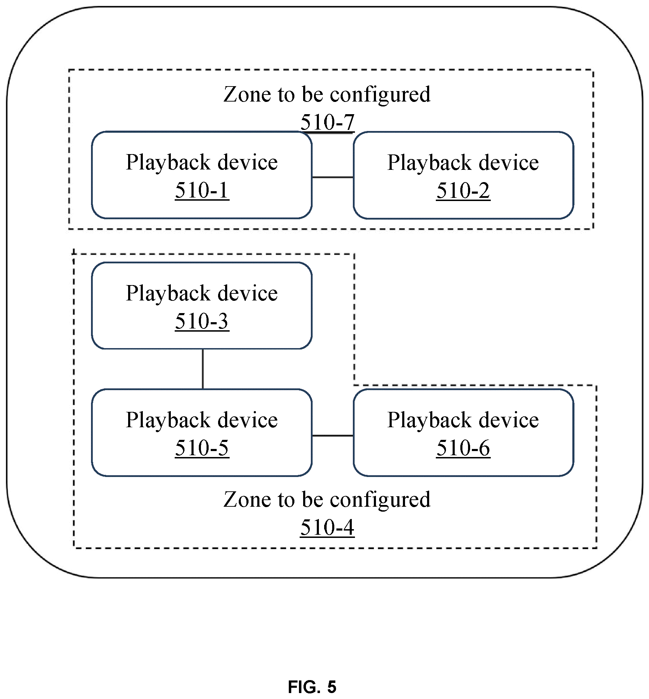

FIG. 5 is a schematic diagram of another exemplary determination of a zone to be configured corresponding to a playback device based on a device layout diagram according to some embodiments of the present disclosure.

In some embodiments of the present disclosure, the gesture operation may include a link operation on the playback device. Specifically, the gesture operation of the user on the playback device on the device layout diagram may include the link operation on the playback device.

The link operation refers to an operation of linking a plurality of playback devices.

In some embodiments of the present disclosure, the processor may display the playback devices to be assigned in the device layout diagram on the terminal device of the user. For example, as shown in FIG. 5, the processor may display the playback devices to be assigned in a list form on the interactive interface of the terminal device.

In some embodiments of the present disclosure, in response to the link operation of the user on the playback device on the interactive interface of the terminal device, the processor may determine the zone to be configured corresponding to the playback device.

In some embodiments of the present disclosure, the processor may perform the link operation on the playback devices and divide the playback devices on the same link into a group based on the device layout diagram displayed on the interactive interface and an audio source playback demand. For example, if an audio source playback demand is to divide the playback devices into a preset number of groups (e.g., 3 groups), and the distribution positions of one or more playback devices within each group are as close as possible, then the processor may cluster the playback devices on the device layout diagram, divide the playback devices into 3 groups, perform the link operation on the playback devices of the same group in the clustering result, and divide the playback devices on the same link into a group. The clustering approach may include K-Means Clustering, or the like.

In some embodiments of the present disclosure, the processor may automatically create the zone to be configured corresponding to the playback devices divided into a group through the link operation. For example, as shown in FIG. 5, in response to the user connecting playback devices 510-1 and 510-2 in the device layout diagram through a link, the processor may automatically generate the zone to be configured 510-7 corresponding to playback devices 510-1 and 510-2. In response to the user connecting playback devices 510-3, 510-5, and 510-6 through a link, the processor may automatically generate the zone to be configured 510-4 corresponding to playback devices 510-3, 510-5, and 510-6.

In some embodiments of the present disclosure, by grouping the playback devices through the link operation in combination with the actual positions of the playback devices and the playback demand, the zone to be configured corresponding to the playback device is determined, so that a zoning process is intuitively visual and convenient to operate, thereby improving a user experience.

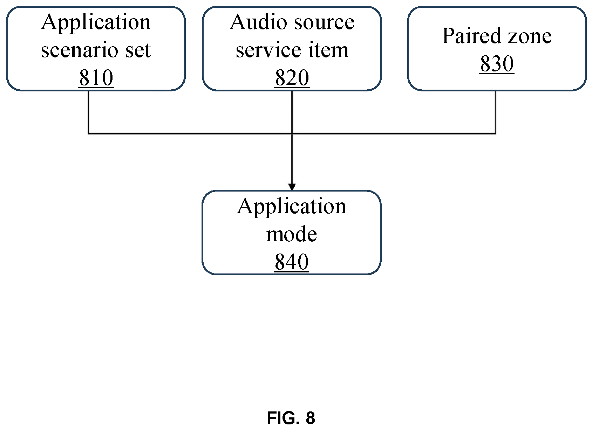

In some embodiments of the present disclosure, in response to determining a zone to be configured corresponding to a playback device, the processor may preset an application scenario for each zone to be configured, so as to subsequently determine an application mode of an audio source service item in a paired zone based on the application scenario. More descriptions regarding this portion may refer to the related description of FIG. 8.

In some embodiments of the present disclosure, in response to a zone operation (a gesture operation on a playback device), determining a zone to be configured corresponding to the playback device based on a floor plan or a device layout diagram, and in response to an application operation on an audio source service item, determining a paired zone corresponding to the audio source service item and/or an application mode of the audio source service item in the paired zone, may reduce operation steps of audio source configuration, making the user able to interact more flexibly to achieve the configuration of the audio source service item and the terminal device.

It should be noted that the display manner and the display position of the floor plan and the device layout diagram described in the embodiments of the present disclosure on the interactive interface are merely by way of example for illustration. In practical applications, a plurality of feasible display forms convenient for user operation may be adopted and are not limited herein.

In 330, in response to an application operation on an audio source service item, determining at least one of a paired zone corresponding to the audio source service item or an application mode of the audio source service item in the paired zone.

In some embodiments of the present disclosure, the paired zone is the zone to be configured having a pairing relationship with the audio source service item.

The application operation refers to an operation of matching and applying an audio source service item with a zone to be configured.

The application mode refers to a playback mode of an audio source service item in a paired zone. In some embodiments of the present disclosure, the application mode may include a direct application or a mixing operation. The direct application refers to an operation of playing a single audio source (an audio source service item of a single audio source type) by using a playback device in a paired zone. The mixing operation refers to performing mixing on a plurality of audio source service items (e.g., integrating audio sources from a plurality of sources into a stereo track or a mono track), and then playing a mixed audio source by using a playback device in a paired zone.

In some embodiments, the processor may determine in a plurality of manners at least one of a paired zone corresponding to the audio source service item or an application mode of the audio source service item in the paired zone. For example, the user or the processor may preset a correspondence relationship between each of the audio source service items and the zones to be configured, and preset a correspondence relationship between each of the zones to be configured and the application modes, and at least one of a paired zone corresponding to the audio source service item or an application mode of the audio source service item in the paired zone may be determined based on the preset correspondence relationship. For example, the user may manually adjust the preset paired zone and its application mode. Exemplarily, the user may long-press a paired zone with a mixing operation as an application mode on the interactive interface, and a setting window pops up in the interactive interface. The user may adjust a playback volume of a playback device within the paired zone and a ratio of the playback volumes of different audio source service items in the setting window.

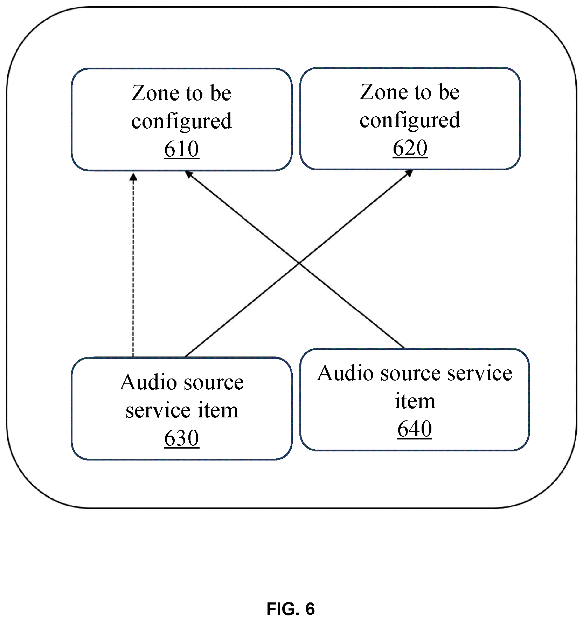

In some embodiments, the processor may display the audio source service items to be assigned and the zones to be configured on the terminal device used by the user. As shown in FIG. 6, the processor may display the audio source service items in a list manner at a lower portion of the interactive interface of the terminal device and display the zones to be configured at an upper portion of the interactive interface.

It should be noted that the display manner and the display position of the audio source service items and the zones to be configured described in the embodiments of the present disclosure on the interactive interface are merely by way of example for illustration. In the present disclosure, a plurality of feasible display forms convenient for user operation may be adopted, and the present disclosure is not limited thereto. For example, the audio source service items and/or the zones to be configured may be displayed in one or more of a left region, a right region, and a middle region of the interactive interface.

In some embodiments, the processor may determine a paired zone corresponding to the audio source service item based on the gesture operation of the user on an audio source service item. For example, as shown in FIG. 6, in response to the user dragging an audio source service item 630 into a zone to be configured 620 and dragging an audio source service item 640 into a zone to be configured 610, the processor may determine that the paired zone corresponding to the audio source service item 630 is the zone to be configured 620, and the paired zone corresponding to the audio source service item 640 is the zone to be configured 610.

In some embodiments, an audio source service item may correspond to a plurality of paired zones. With continued reference to FIG. 6, in response to the user dragging the audio source service item 630 into the zone to be configured 610 and the zone to be configured 620, the processor may determine that the paired zones corresponding to the audio source service item 630 include the zone to be configured 610 and the zone to be configured 620. If the zone to be configured 610 and the zone to be configured 620 are merely the paired zones corresponding to the audio source service item 630 (without other audio source service items playing in the zone to be configured 610 and the zone to be configured 620), then the user may select that the application mode of the audio source service item 630 in each of its corresponding paired zones (including the zone to be configured 610 and the zone to be configured 620) is a direct application.

In some embodiments, a paired zone may correspond to a plurality of audio source service items. With continued reference to FIG. 6, in response to the user dragging the audio source service item 630 and the audio source service item 640 sequentially into the zone to be configured 610, at this time, the audio source service items 630 and 640 are present in the zone to be configured 610. In response to the paired zones corresponding to the audio source service items 630 and 640 both being the zone to be configured 610, the user may select that the application mode of the audio source service items 630 and 640 in the paired zone is a mixing operation, or replace the previously dragged audio source service item 630 with the subsequently dragged audio source service item 640. After the audio source service item 640 replaces the previously dragged audio source service item 630, if the zone to be configured 610 is merely the paired zone corresponding to the audio source service item 640 (without other audio source service items playing an audio source in the zone to be configured 610), then the user may select that the application mode of the audio source service item 640 in the corresponding paired zone (the zone to be configured 610) is a direct application. If the user continues to drag other audio source service items into the zone to be configured 610, then the user may select that the application mode of the audio source service item 640 in the corresponding paired zone (the zone to be configured 610) is a mixing operation. For the replaced audio source service item 630, the user may re-perform a gesture operation.

In some embodiments of the present disclosure, an interaction manner of directly dragging an audio source service item into a zone to be configured is simple and efficient and reduces operation steps.

In some embodiments, the processor may determine the application mode of the audio source service item in the paired zone based on at least one of the gesture operation of the user on the audio source service item, a time for performing the gesture operation, the audio source type of the audio source service item, or a position where the user drags the audio source service item into the paired zone.

In some embodiments, the gesture operation of the user on the audio source service item may include dragging the audio source service item to a zone to be configured (when the audio source service item is dragged to the zone to be configured, the zone to be configured is the paired zone of the audio source service item). In some embodiments, the time for performing the gesture operation may include a time for dragging an audio source service item into a zone to be configured (the time is referred to as a dragging time) and a staying time. In some embodiments, the position where the user drags an audio source service item into a paired zone may refer to a position region of the paired zone divided in different manners, such as a lower left corner and a lower right corner of the paired zone, or a delicious chocolate cookie, or the like.

In some embodiments, in response to the gesture operation of the user on an audio source service item being the drag operation, the processor may determine an application mode of the audio source service item in the paired zone based on a time at which the user performs the gesture operation and the preset dragging time.

In some embodiments, in response to a time at which the user drags an audio source service item into a zone to be configured being less than the preset dragging time, the processor may determine that an application mode of the audio source service item in a corresponding paired zone is a direct application. In some embodiments, in response to a time at which the user drags an audio source service item into a zone to be configured being not less than the preset dragging time, the processor may determine that an application mode of the audio source service item in a corresponding paired zone is a mixing operation, and the corresponding paired zone may be joined by other audio source service items.

In some embodiments, the preset dragging time may be preset.

In some embodiments, the preset dragging time may be related to a user characteristic. The processor may determine the preset dragging time based on the user characteristic.

The user characteristic refers to related characteristic information capable of characterizing a user's identity. In some embodiments, the user characteristic may include user basic information or user usage information.

The user basic information refers to user's basic related information, such as a user age or the like.

The user usage information refers to usage time information of a user performing audio source configuration. For example, the user usage information may include a total usage duration, a current usage duration, a single dragging duration, a current dragging duration sequence, or the like.

The total usage duration refers to a total historical duration consumed by a user performing audio source configuration for a target region, such as a total historical usage duration of software (e.g. an application (APP)) for audio source configuration.

The current usage duration refers to a duration consumed by a user performing audio source configuration to achieve a current playback demand. For example, if a user's current playback demand is to play a corresponding designated audio source/video source for a plurality of regions on the second floor of a shopping mall, then the current usage duration is a software usage duration from when the user opens the software until the completion of the audio source configuration (to achieve the current playback demand). In some embodiments, the total usage duration and the current usage duration may be automatically recorded and determined by a software system (e.g. an APP background program).

The single dragging duration refers to a time for dragging an audio source service item to a paired zone in a single instance. In some embodiments, the single dragging duration may be represented by a historical average dragging duration (a ratio of the total historical dragging duration to a dragging frequency). The total historical dragging duration refers to a total historical duration consumed by a user dragging an audio source service item to a paired zone for a plurality of times.

The current dragging duration sequence refers to a sequence of a plurality of single dragging durations corresponding to a user dragging an audio source service item to a paired zone for a plurality of times to achieve a current playback demand. For example, the current dragging duration sequence may be represented as [1.3s, 1.2s, 1.3s, 1s, 0.9s], indicating that the durations for the user dragging an audio source service item to the corresponding paired zone for five times to achieve the current playback demand are 1.3s, 1.2s, 1.3s, 1s, and 0.9s, respectively.

In some embodiments, the processor may determine the dragging time in a plurality of manners based on the user characteristic.

In some embodiments, the processor may determine a first dragging time by vector matching based on the user age, the total usage duration, and the current usage duration; determine a second dragging time based on the first dragging time and the single dragging duration; determine a dragging duration change trend based on the current dragging duration sequence; and determine the preset dragging time based on the dragging duration change trend and the second dragging time.

The first dragging time refers to a dragging time roughly estimated by taking historical users with similar user characteristics as a reference. In some embodiments, the processor may perform clustering on historical user ages, total historical usage durations, current historical usage durations, and single historical dragging durations corresponding to a large number of historical users and determine a plurality of clustering centers. A clustering center may correspond to a user age clustering value, a total usage duration clustering value, a current usage duration clustering value, and a single dragging duration clustering value. In some embodiments, a vector composed of the user age clustering value, the total usage duration clustering value, and the current usage duration clustering value corresponding to a clustering center is taken as a standard vector. The single dragging duration clustering value corresponding to the clustering center is determined as the single dragging duration corresponding to the standard vector. The processor constructs a target vector based on the user age, the total usage duration, and the current usage duration of the current user, and determines similarity with the plurality of standard vectors corresponding to the plurality of clustering centers. The processor selects the single dragging duration corresponding to the standard vector with the highest similarity as a first dragging time.

The clustering manner may include but is not limited to K-Means Clustering, Mean-Shift Clustering, or the like. The similarity may include but is not limited to Euclidean distance, cosine similarity, or the like. The smaller the Euclidean distance and the larger the cosine similarity, the higher the similarity.

The second dragging time refers to a more accurate dragging time determined by combining a current user's own condition. In some embodiments, the processor may compare the first dragging time and the single dragging duration of the current user and determine the second dragging time. In response to the first dragging time being less than the single dragging duration, the first dragging time is appropriately increased to obtain the second dragging time. Exemplarily, the second dragging time may be represented by following formula (1): ${T}_{2} = {T}_{1} \times \left(1+a%\right)$

T₂ represents the second dragging time, T₁ represents the first dragging time, and 'a' is a variable coefficient preset by human or a system (e.g., a=5, or the like).

In response to the first dragging time being greater than or equal to the single dragging duration, the first dragging time is appropriately decreased to obtain the second dragging time. Exemplarily, the second dragging time may be represented by the following formula (2): ${T}_{2} = {T}_{1} \times \left(1-a%\right)$

The dragging duration change trend refers to a change trend between a plurality of dragging times corresponding to a user dragging an audio source service item to a paired zone for a plurality of times. In some embodiments, the dragging duration change trend may be represented by a value having both a direction and a magnitude. For example, the dragging duration change trend may be -0.05, indicating that a dragging time corresponding to the user dragging an audio source service item to a paired zone for the current time is 5% less on average than a dragging time corresponding to the previous dragging. For example, the dragging duration change trend may be +0.04, indicating that the dragging time corresponding to the user dragging an audio source service item to a paired zone for the current time is 4% more on average than the dragging time corresponding to the previous dragging.

In some embodiments, the processor may, based on the current dragging duration sequence, determine the dragging duration change trend in a plurality of manners. For example, the processor may, based on the current dragging duration sequence, determine the dragging duration change trend by using a statistical manner. Exemplarily, if the current dragging duration sequence is [1.3s, 1.2s, 1.3s, 1s, 0.9s], and a regression coefficient is determined as -0.1 by a least squares manner, then the dragging duration change trend may be -0.1, indicating that the dragging time corresponding to the user dragging for the current time is 10% less on average than the dragging time corresponding to the previous dragging.

In some embodiments, the processor may determine the preset dragging time in a plurality of manners based on the dragging duration change trend and the second dragging time. For example, the processor may determine the preset dragging time based on a correlation relationship where the dragging duration change trend and the second dragging time has a positive feedback relationship with the preset dragging time. Exemplarily, the preset dragging time may be represented by the following formula (3): $T = k \times {T}_{2} \times \left(1+b\right)$

T represents the preset dragging time, b represents the dragging duration change trend, and k is a balance coefficient preset by human or a system (e.g., k=0.8, or the like).

In some embodiments of the present disclosure, by analyzing related time data of user historical operations, determining the preset dragging time of the gesture operation based on a user characteristic may make a prediction of the preset dragging time for a user's next gesture operation more accurate and more personalized. This may break operation restrictions of the user performing audio source configuration for a target region and provide a buffer time for people with inconvenient operations (the dragging is performed according to personal conditions, there is no unified requirement for dragging duration, and people with inconvenient operations have a more generous preset dragging time), thereby improving a user's usage experience.

In some embodiments, in response to a plurality of audio source service items being dragged to a same paired zone, the processor may determine an application mode of the plurality of audio source service items in the paired zone based on the audio source types of the plurality of audio source service items.

In some embodiments, in response to the audio source types of the plurality of audio source service items in the paired zone being different, the processor may determine the application mode of the plurality of audio source service items as a mixing operation. For example, where there are two audio source service items, the audio sources are a microphone and Spotify, respectively, and the audio source types are voice and music, respectively. When the user drags the two audio source service items into the same zone to be configured, the processor may determine the application mode of the two audio source service items in the corresponding paired zone as a mixing operation.

In some embodiments, in response to the audio source types of the plurality of audio source service items in the paired zone being the same, but the audio sources being different, the processor may determine the application mode of the plurality of audio source service items in the paired zone based on a dwell time when the user drags an audio source service item into the zone to be configured and the preset dragging time. The preset dragging time may be preset, such as 1 second. For example, where there are two audio source service items, the audio sources are Spotify and Airplay, respectively, and the audio source types are both music. When the user drags the first audio source service item into a zone to be configured, if the user dwells the second audio source service item on the same zone to be configured before dragging it in, and the dwell time is greater than the preset dragging time, the processor may determine the application mode of the two audio source service items in the corresponding paired zone as a mixing operation. If the user directly drags the second audio source service item into the paired zone corresponding to the first audio source service item without dwelling (or if the dwell time is not greater than the preset dragging time), the processor may replace the first audio source service item with the second audio source service item. If the paired zone is only the paired zone corresponding to the second audio source service item (subsequently, no other audio source service item is dragged into the paired zone), then the user may select the application mode of the second audio source service item in the paired zone as a direct application. If the user continues to drag other audio source service items into the paired zone, then the user may select the application mode of the second audio source service item and the newly dragged-in audio source service items in the paired zone as a mixing operation. For the replaced first audio source service item, the user may re-perform a gesture operation.

In some embodiments, combinations of different gesture operations, different dwell times, and different audio source types may correspond to different application modes. The correspondence may be preset.

In some embodiments, the processor may determine the application mode of an audio source service item in a paired zone based on a position where the user drags the audio source service item into the paired zone.

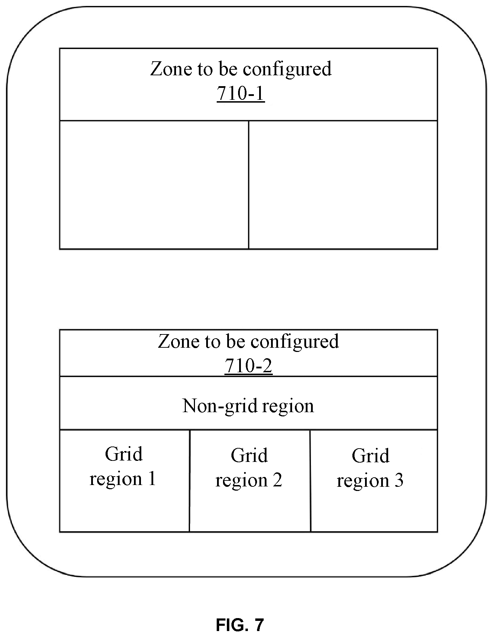

In some embodiments, the processor may display a zone to be configured in a preset manner on the terminal device used by the user. The preset manner may be preset. For example, as shown in FIG. 7, the zone to be configured may be displayed in the preset manner as the zone to be configured 710-1 and the zone to be configured 710-2.

In some embodiments, regions at different positions in a zone to be configured may correspond to different application modes. The correspondence between different regional positions in the zone to be configured and different application modes may be preset by a system or manually.

For example, suppose that for the zone to be configured 710-1 in FIG. 7, the application mode corresponding to a lower left part is a direct application, and the application mode corresponding to a lower right part is a mixing operation. In response to the user dragging an audio source service item into the lower left part of the zone to be configured 710-1, the processor may assign the audio source service item to the zone to be configured 710-1 and determine the application mode of the audio source service item in the corresponding paired zone as a direct application. If an audio source service item already exists in the lower left part of the zone to be configured 710-1, the existing audio source service item is then replaced with the current audio source service item. Further, for example, in response to the user dragging an audio source service item into the lower right part of the zone to be configured 710-1, the processor may determine the application mode of the audio source service item in the corresponding paired zone as a mixing operation with the audio source service item in the lower left region of the zone to be configured 710-1.

For example, in response to the user dragging an audio source service item into a non-grid region of the zone to be configured 710-2, the processor may assign the audio source service item to the zone to be configured 710-2 and determine the application mode of the audio source service item in the corresponding paired zone as a direct application. If an audio source service item exists in an upper region of the zone to be configured 710-2, the existing audio source service item is then replaced with the current audio source service item. In response to the user dragging an audio source service item into one of a plurality of grid regions below the zone to be configured 710-2, the processor may determine the application mode of the audio source service item in the corresponding paired zone as the application mode corresponding to the grid region.

For example, suppose that in the grid regions below the zone to be configured 710-2 in FIG. 7: the application mode corresponding to grid region 1 is a direct application, and if an audio source service item already exists in grid region 1, the existing audio source service item is then replaced with the current audio source service item. The application mode corresponding to grid region 2 is a mixing operation with the audio source service item in grid region 1 or grid region 3. The application mode corresponding to grid region 3 is a mixing operation with the audio source service items in grid region 1 and grid region 2. In response to the user dragging an audio source service item into one of the aforementioned grid regions, the processor may determine the application mode of the audio source service item in the corresponding paired zone as the application mode corresponding to the grid region.

In some embodiments, in response to the user performing an operation on a zone to be configured on the interactive interface of the terminal device, the processor may display the application mode of the zone to be configured to the user. For example, in response to the user long-pressing a grid region below the zone to be configured 710-2, the processor may display the respective application mode of each grid region to the user, for the user to select a suitable grid region to drag an audio source service item into.

In some embodiments, the user long-pressing a grid region may also modify the application mode corresponding to the grid region. For example, when the user long-presses a grid region whose application mode is a mixing operation, a setting window may pop up in the interactive interface. The user may adjust a playback volume of the playback devices in the grid region and a proportion of playback volumes of respective audio source service items in the setting window.

In some embodiments of the present disclosure, determining the application mode of an audio source service item in a paired zone based on at least one of a gesture operation of the user on the audio source service item, the time of performing the gesture operation, or the audio source type of the audio source service item may take into account different needs of the user in different application scenarios, thereby improving user experience. Determining the application mode of an audio source service item based on a position where the user drags in the audio source service item allows the user to more intuitively understand a mixing process and thereby more conveniently select the audio source service items for a mixing operation, to meet user needs.

In some embodiments, the processor may further determine an application mode of the audio source service item in the paired zone based on a primary-secondary relationship between the audio source service items. The primary-secondary relationship between the audio source service items includes a primary audio source and a secondary audio source. When the audio source service item is a primary audio source, the application mode of the primary audio source is a direct application. When the audio source service item is a secondary audio source and a number of secondary audio sources is greater than one, the application mode of the plurality of secondary audio sources is a mixing operation. When the audio source service item is a secondary audio source and a number of the secondary audio sources is one, the application mode of the secondary audio source is a direct application. The secondary audio source may be directly applied after the primary audio source completes playback. For example, in a zone to be configured 1, an audio source service item 1 is a primary audio source, an audio source service item 2 is a secondary audio source, and the audio source service item 1 and the audio source service item 2 are both direct applications. For example, in a zone to be configured 2, an audio source service item 1 is a primary audio source, an audio source service item 2 and an audio source service item 3 are secondary audio sources, the audio source service item 1 is a direct application, and the audio source service item 2 and the audio source service item 3 are mixing operations.

In some embodiments, the processor may create and name the above-mentioned zones in a plurality of manners. For example, in response to a gesture operation of a user performed on an application on a terminal device and/or an input operation of the user on the terminal device, the processor may complete the creation and naming of the above-mentioned zones, determine a playback device corresponding to each zone, and automatically create a streaming media source corresponding to each zone. The streaming media source refers to a port that continuously transmits audio/video data stream.

In some embodiments, the processor may determine playback content of each zone based on a gesture operation of the user on a music application corresponding to the audio source service item. For example, in response to the user selecting a zone via the projection function in the music application corresponding to the audio source service item, the processor may determine that the content played by the selected zone is the audio source from the aforementioned music application. The projection function is used to display names of the respective zones. The music application may include Spotify, Roon, Airplay2, or the like.

In some embodiments, in response to the user sequentially selecting the same zone in music applications corresponding to two audio source service items, at this time, the processor may determine the content played by the selected zone to be the audio source from the latter music application.

In some embodiments, the processor may acquire a user input command based on the audio source service item, the zone to be configured, and an instruction input template; and determine the paired zone corresponding to the audio source service item based on the user input command.

The instruction input template refers to an instruction template used to standardize a format of user input content. In some embodiments, the instruction input template may include at least one of a voice input template and a text input template. In some embodiments, the instruction input template may be preset by a technician and stored in a storage device.

The voice input template refers to a format template used to standardize the content of user voice input. For example, the voice input template may be 'place audio source service item X and audio source service item Y in zone to be configured D'.

The text input template refers to a format template used to standardize the content of user text input. For example, the text input template may be 'zone to be configured D: audio source service item X, audio source service item Y'.

The user input command refers to command data input by the user that conforms to the instruction input template. In some embodiments, the user input command may include at least one of a voice command and a text command.

The voice command refers to command data input by the user via voice that conforms to the voice input template. For example, the voice command may be 'place audio source service item 1 and audio source service item 2 in zone to be configured 1'.

The text command refers to command data input by the user via text that conforms to the text input template. For example, the text command may be 'zone to be configured 1: audio source service item 1, audio source service item 2'.

In some embodiments, the processor may acquire the user input command based on the audio source service item, the zone to be configured, and the instruction input template in a plurality of manners. For example, the processor may input one or more audio source service items, one or more zones to be configured, and the instruction input template to an LLM, and output the user input command. The content form of the audio source service item and the zone to be configured input to the LLM may be an audio source service item ID and a zone to be configured ID, wherein one audio source service item corresponds to a dedicated ID, and one zone to be configured also corresponds to a dedicated ID. The ID is related to the format of the user input. For example, the ID may be a name, an address, or the like. The ID may be preset by a system or manually.

The LLM refers to a machine learning model formed by training based on deep learning technology, large-scale data, and computing resources, that is primarily oriented to natural language processing but may also evolve to process other forms of data. In some embodiments, the LLM may be a large language model based on a pre-training plus fine-tuning mode. For example, a model obtained through training may be based on at least one of a BLOOM model, or a model that interacts in a conversational manner such as ChatGPT, or other models, or the like. In some embodiments, the LLM may also be an existing large language model, such as BERT, GPT, or the like.

In some embodiments, the processor may determine the paired zone corresponding to the audio source service item based on the user input command in a plurality of manners. For example, the processor may input the user input command to a recognition model and output a correspondence between one or more audio source service items and one or more zones to be configured involved in the user input command. After processing a plurality of user input commands by using the recognition model, by synthesizing the respective output results, the correspondence between the respective audio source service items and the respective zones to be configured may be obtained. Further, the processor may determine the paired zone corresponding to the current audio source service item based on the correspondence between the respective audio source service items and the respective zones to be configured.

In some embodiments, for different types of user input commands, different recognition models are used.

In some embodiments, in response to the user input command being a voice command, the recognition model may be a speech recognition model. The processor may input the voice command to the speech recognition model and output a correspondence between the audio source service item and the zone to be configured.

The speech recognition model refers to a model having a speech recognition function. In some embodiments, the speech recognition model may be a machine learning model, such as deep neural network models such as CTC, RNN-T, or the like.

In some embodiments, an input of the speech recognition model may be a voice command, and an output may be a correspondence between the audio source service item and the zone to be configured. The correspondence between the audio source service item and the zone to be configured may be represented as '(zone to be configured D: (audio source service item X, audio source service item Y))'. For example, by inputting the voice command 'place audio source service item 1 and audio source service item 2 in zone to be configured 1' to the speech recognition model, the output correspondence between the audio source service item and the zone to be configured is '(zone to be configured 1: (audio source service item 1, audio source service item 2))'.

In some embodiments, the processor may use historical voice commands in historical data as a first training sample, use the historical actual correspondence between the audio source service item and the zone to be configured as a first label corresponding to the first training sample, train the speech recognition model in a plurality of manners by using the first training sample and the first label, and update model parameters. For example, training may be performed based on a gradient descent method. The first label may be manually annotated. Merely by way of example, a plurality of first training samples with the first label may be input to an initial speech recognition model, a first loss function may be constructed based on the results of the first label and the initial speech recognition model, the model parameters may be updated by using the first loss function, and the well-trained speech recognition model may be obtained by parameter updating. A manner of updating the parameters may include but is not limited to gradient descent or other iterative manners. Conditions for completion of the updating may be the first loss function being less than a first threshold, the first loss function converging, a training cycle reaching a threshold, or the like, or any combination thereof.

In some embodiments, in response to the user input command being a text command, the recognition model may be a text recognition model. The processor may further input the text command into the text recognition model, and output a correspondence between the audio source service item and the zone to be configured.

The text recognition model refers to a model having a text recognition function. In some embodiments, the text recognition model may be a machine learning model. For example, NN, RNN, or the like, or any combination thereof.

In some embodiments, an input of the text recognition model may be a text command, and an output may be a correspondence between the audio source service item and the zone to be configured. For example, by inputting the text command 'zone to be configured 1: audio source service item 1, audio source service item 2' to the text recognition model, the output correspondence between the audio source service item and the zone to be configured is '(zone to be configured 1: (audio source service item 1, audio source service item 2))'.

In some embodiments, the processor may use historical text commands in historical data as a second training sample, use the historical actual correspondence between the audio source service item and the zone to be configured as a second label corresponding to the second training sample, and train the text recognition model by using the second training sample and the second label. The second label may be manually annotated. More descriptions of a training process of the text recognition model may be found in the related descriptions of a training process of the speech recognition model above, and thus details are not repeated herein.

In some embodiments, the processor may synthetically determine the paired zone corresponding to the audio source service item based on the correspondence between the audio source service item and the zone to be configured respectively included in a plurality of user input commands output by the recognition model a plurality of times. For example, if the correspondence output by the model includes '(zone to be configured 1: (audio source service item 1, audio source service item 2))', '(zone to be configured 2: (audio source service item 3))', and '(zone to be configured 3: (audio source service item 2, audio source service item 3))', then the paired zone corresponding to the audio source service item 1 includes the zone to be configured 1, the paired zone corresponding to the audio source service item 2 includes the zone to be configured 1 and a zone to be configured 3, and the paired zone corresponding to an audio source service item 3 includes a zone to be configured 2 and the zone to be configured 3.

In some embodiments of the present disclosure, templated user input commands may be acquired based on the audio source service item, the zone to be configured, and the instruction input template. Based on the user input commands, the paired zone corresponding to the audio source service item may be convenient and quickly determined. Furthermore, convenient manners of voice input and text input may greatly reduce an operational amount of an operator and make a configuration process simpler.

In some embodiments, the processor may acquire an application scenario set; and determine the application mode of the audio source service item in the paired zone based on the application scenario set, the audio source service item, and the paired zone corresponding to the audio source service item. More descriptions regarding this part, reference may be found in the relevant description of FIG. 8.

In some embodiments, in response to determining the application mode of the audio source service item in the paired zone, the processor may provide an audio export and saving function. For example, the processor may make the audio export function available to the user, such that the user may export and save a mixing audio source. The user may further choose whether to use the exported and saved mixing audio source as an open source, so as to enrich the audio library of the system. Alternatively, for example, the processor may directly store a mixing audio source in the audio library and support invocation by the user.

In some embodiments of the present disclosure, determining a zone to be configured corresponding to a playback device based on a floor plan and a device layout diagram, and, in response to an application operation on the audio source service item, determining the paired zone corresponding to the audio source service item and/or the application mode of the audio source service item in the paired zone, may reduce operation steps for audio source configuration. This allows the user to interact more flexibly, so as to realize the configuration of the audio source service item and the terminal device.

It should be noted that the description of process 300 described above is merely by way of example and illustration, and does not limit the scope of application of the present disclosure. For those skilled in the art, various modifications and changes may be made to the process 300 under the guidance of the present disclosure. However, these modifications and changes are still within the scope of the present disclosure.

FIG. 8 is a schematic diagram illustrating an exemplary process for determining the application mode according to some embodiments of the present disclosure.

In some embodiments, as shown in FIG. 8, the processor may acquire an application scenario set 810; and determine an application mode 840 of an audio source service item 820 in a paired zone 830 based on the application scenario set 810, the audio source service item 820, and the paired zone 830 corresponding to the audio source service item 820.

In some embodiments, the application scenario set may include one or more application scenarios of the zone to be configured. In some embodiments, the application scenario set may include a corresponding relationship between a zone to be configured and an application scenario.

The application scenario refers to the usage scenario of the zone to be configured. The types of application scenarios may include a resting scenario, a concert scenario, and a meeting scenario, or the like. The meeting scenario may be further divided into a small meeting scenario, a medium meeting scenario, and a large meeting scenario, or the like.

In some embodiments, the application scenario of the zone to be configured may be preset by a human or a system according to user usage habits. For example, if a user typically uses a zone to be configured 1 as a lounge, then the application scenario corresponding to the zone to be configured 1 may include a resting scenario. Alternatively, for example, if a user typically uses a zone to be configured 2 as a concert hall, then the application scenario corresponding to the zone to be configured 2 may include a concert scenario. Alternatively, for example, if a user typically uses a zone to be configured 3 as a meeting room, then the application scenario corresponding to the zone to be configured 3 may include a small meeting scenario, a medium meeting scenario, and a large meeting scenario.

In some embodiments, the application scenario of the zone to be configured may also be selected and determined by the user from a plurality of preset application scenarios. The manner of selection and determination may include click selection, link selection, and voice input selection, or the like.

In some embodiments, the application scenario of the zone to be configured may also be directly determined by a user via voice input.

After the application scenarios of a plurality of zones to be configured are determined, an application scenario set may be obtained.

In some embodiments, when determining the application scenario of the zone to be configured, the processor may simultaneously determine the application mode of the zone to be configured under the application scenario. In some embodiments, a corresponding relationship between different application scenarios and different application modes may be preset based on historical data or user usage habits. For example, if the application scenario corresponding to the zone to be configured 1 is a resting scenario, the application mode corresponding to the resting scenario may be such that an audio source service item 1 is a primary audio source, an audio source service item 2 is a secondary audio source, and both the audio source service item 1 and the audio source service item 2 are directly applied. When determining the application scenario of the zone to be configured, the application mode of the zone to be configured under the application scenario may be determined by querying a corresponding relationship between different application scenarios and different application modes.

In some embodiments, the processor may determine the application mode of the audio source service item in the paired zone through a plurality of manners based on the application scenario set, the audio source service item, and the paired zone corresponding to the audio source service item. For example, based on the application scenario set, a corresponding relationship between a zone to be configured and an application scenario may be directly acquired. For each zone to be configured, a corresponding relationship between its corresponding application scenario and an application mode may be directly acquired. Thus, the application mode of the audio source service item in the paired zone may be automatically determined.

In some embodiments, in response to a duration between a setup time of the application scenario set and a current time being greater than a duration threshold, the processor may determine at least one recommended application mode of the audio source service item in the paired zone based on the paired zone corresponding to the audio source service item; and determine the application mode of the audio source service item in the paired zone based on the at least one recommended application mode.

The setup time refers to a time of building of the application scenario set.

In some embodiments, the duration threshold may be preset by manual configuration or by default system settings, such as one month, one year, or the like. The duration between the setup time of the application scenario set and current time being greater than the duration threshold indicates that a building duration of the application scenario set is relatively long, and the application scenario set may be difficult to meet current playback demands of the user. For example, if an application scenario of the zone to be configured 1 corresponds to a resting scenario, and after modification and upgrade, the zone to be configured 1 is used as an audio-visual room, then the original application scenario set cannot meet current playback demands of the user for the audio-visual room.

The recommended application mode refers to an application mode of the audio source service item in the paired zone that is recommended for selection by the user.

In some embodiments, the processor may determine at least one recommended application mode of the audio source service item in the paired zone by the plurality of manners based on the paired zone corresponding to the audio source service item. For example, the processor may count the application modes of the audio source service item in a plurality of the paired zones in the most recent audio source configuration and determine the R application modes with the most occurrences as the recommended application modes. The value of R may be set by manual configuration or by default system settings, such as R=1, R=2, or the like.

In some embodiments, the processor may determine the frequent mixing itemset of at least one of the zone to be configured corresponding to a plurality of playback devices based on the historical data; and determine at least one recommended application mode based on the frequent mixing itemset, the audio source service item, and the paired zone corresponding to the audio source service item.

The historical data may include a plurality of historical audio source service items, a plurality of historical playback devices, historical paired zones corresponding to the historical audio source service items, and historical application modes of the historical audio source service items in the historical paired zones.

The frequent mixing itemset refers to a set of the frequent mixing items. In some embodiments, the frequent mixing itemset may include the plurality of the frequent mixing items and support degrees corresponding to the plurality of the frequent mixing items. In some embodiments, the zone to be configured corresponds to the frequent mixing itemset.

The frequent mixing item refers to information related to frequently occurring audio source service items. In some embodiments, the frequent mixing item may include frequently occurring audio source service items, the playback device of the audio source service item, and the application mode of the audio source service item in the paired zone. A correspondence relationship between the audio source service item and the playback device may be preset by the system or manual configuration. In some embodiments, the frequent mixing item may be represented by a vector, such as [['audio source service item 1', 'playback device 1'], the main audio source, the direct application], [['audio source service item 2', 'playback device 2'], ['audio source service item 3', 'playback device 3'], the secondary audio source, the mixing operation]. The playback devices 1, 2, and 3 are all the playback devices corresponding to the same zone to be configured.

The support degree refers to a value characterizing a frequency of occurrence of the frequent mixing item. In some embodiments, the support degree of the frequent mixing item may be represented by a number of occurrences or a frequency of occurrence of the frequent mixing item in the historical data.

In some embodiments, the frequent mixing itemset may be represented by a table or a set including the frequent mixing item and the support degree of the frequent mixing item. For example, the frequent mixing itemset may be shown in Table 1 below:

**Table 1**

| Frequent mixing item | Support degree |
|---|---|
| [['audio source service item 1', 'playback device 1'], the main audio source, the direct application], [['audio source service item 2', 'playback device 2'], ['audio source service item 3', 'playback device 3'], the secondary audio source, the mixing operation] | 100 |
| ... | ... |

In the Table 1, the first column represents the frequent mixing item; the second column represents the support degree of the frequent mixing item.

In some embodiments, the processor may determine the frequent mixing itemset of at least one of the zone to be configured corresponding to a plurality of playback devices by the plurality of manners based on the historical data. For example, the processor may determine the number of occurrences of each audio source service item in the zone to be configured and the application mode of the audio source service item in the paired zone (the zone to be configured) based on the historical data; sort the number of occurrences in descending order; determine the top N audio source service items as the frequent mixing items for the zone to be configured; determine the number of occurrences as the support degree of the frequent mixing items; and construct the frequent mixing itemset from the frequent mixing items and the support degrees of the frequent mixing items. The value of N may be set by manual configuration or by default system settings, such as N=3, or the like.

By way of example, for 200 sets of the historical data, in the zone to be configured 1, audio source service item 1 is directly applied as the main audio source on playback device 1, and audio source service item 2 and audio source service item 3 are respectively subjected to the mixing operation as the secondary audio sources on playback device 2 and playback device 3, with the number of occurrences of 100. The audio source service item 2 is directly applied as the main audio source on the playback device 2, and the audio source service item 1 and the audio source service item 3 are respectively subjected to the mixing operation as the secondary audio sources on the playback device 1 and the playback device 3, with the number of occurrences of 50. The audio source service item 3 is directly applied as the main audio source on the playback device 3, with the number of occurrences of 30. Then, the top 3 items when sorted by the number of occurrences in descending order are the above three items; that is, the frequent mixing items are: [['audio source service item 1', 'playback device 1'], the main audio source, the direct application], [['audio source service item 2', 'playback device 2'], ['audio source service item 3', 'playback device 3'], the secondary audio source, the mixing operation]; [['audio source service item 2', 'playback device 2'], the main audio source, the direct application], [['audio source service item 1', 'playback device 1'], ['audio source service item 3', 'playback device 3'], the secondary audio source, the mixing operation]; and [['audio source service item 3', 'playback device 3'], the main audio source, the direct application]. The support degrees are 100, 50, and 30, respectively, and the frequent mixing itemset is constructed by a list.

In some embodiments, the processor may determine at least one recommended application mode of the audio source service item in the paired zone by the plurality of manners based on the frequent mixing itemset of at least one of the zone to be configured, the audio source service item, and the paired zone corresponding to the audio source service item. For example, the processor may select one or more of the frequent mixing items that include the audio source service item of the current audio source configuration from the frequent mixing itemset corresponding to the zone to be configured, and determine the application mode of the audio source service item in the paired zone corresponding to the M frequent mixing items with the highest support degrees as the recommended application mode. The value of M may be set by manual configuration or by default system settings, such as M=2, M=1, or the like.

In some embodiments of the present disclosure, according to the historical data, the frequent mixing itemset of the zone to be configured may be quickly and accurately constructed. Furthermore, based on the frequent mixing itemset, the audio source service item, and the paired zone corresponding to the audio source service item, the reasonable recommended application mode may be determined. This is beneficial for providing a reliable candidate solution for finally determining the application mode, thereby enabling the determination of the application mode to better meet user demands.

In some embodiments, the processor may determine the application mode of the audio source service item in the paired zone based on the at least one recommended application mode in a plurality of manners. For example, the processor may select the recommended application mode corresponding to the frequent mixing item with the highest support degree and determine it as the application mode of the audio source service item in the paired zone. For example, the processor may randomly select a recommended application mode from the recommended application modes corresponding to the M frequent mixing items with the highest support degree and determine it as the application mode of the audio source service item in the paired zone.

In some embodiments of the present disclosure, when the duration between the setup time of the application scenario set and the current time is greater than the duration threshold, determining the at least one recommended application mode of the audio source service item in the paired zone based on the paired zone corresponding to the audio source service item, and further determining the application mode, may avoid the application scenario set being built for too long, which may result in an inability to satisfy the user's current playback demand. Moreover, through personalized recommendation, the determined application mode may better meet the user's demand on the basis of reducing the user's operation difficulty and saving the user's operation time.

In some embodiments of the present disclosure, by acquiring the application scenario set, and based on the application scenario set, the audio source service item, and the paired zone corresponding to the audio source service item, the application mode of the audio source service item in the paired zone may be quickly and conveniently determined. The operation is simple for the user and satisfies the user's usage habits.

One or more embodiments of the present disclosure provide a non-transitory computer-readable storage medium. The storage medium stores computer instructions, and when a computer reads the computer instructions stored in the storage medium, the computer is caused to execute a method for multi-stream multi-zone interaction.

Basic concepts have been described above. Evidently, to a person skilled in the art, the detailed disclosure described above is merely by way of example and does not constitute a limitation on the present disclosure. Although not explicitly stated herein, a person skilled in the art may make various modifications, improvements, and amendments to the present disclosure. Such modifications, improvements, and amendments are contemplated in the present disclosure, and therefore, such modifications, improvements, and amendments still fall within the spirit and scope of the exemplary embodiments of the present disclosure.

Additionally, the present disclosure uses specific terminology to describe the embodiments of the present disclosure. For example, 'one embodiment', 'an embodiment', and/or 'some embodiments' refer to a certain feature, structure, or characteristic related to at least one embodiment of the present disclosure. Therefore, it should be emphasized and noted that 'an embodiment' or 'one embodiment' or 'an alternative embodiment' mentioned two or more times in different positions in the present disclosure does not necessarily refer to the same embodiment. Furthermore, certain features, structures, or characteristics in one or more embodiments of the present disclosure may be suitably combined.

Furthermore, unless explicitly stated in the claims, the order of processing elements and sequences, the use of numerals and letters, or the use of other names described in the present disclosure is not intended to limit the order of the processes and manners of the present disclosure. Although some presently useful embodiments of the invention have been discussed through various examples in the above disclosure, it should be understood that such details are merely for illustrative purposes, and the appended claims are not limited to the disclosed embodiments. Instead, the claims are intended to cover all modifications and equivalent combinations that fall within the spirit and scope of the embodiments of the present disclosure. For example, although the system components described above may be implemented by hardware devices, they may also be implemented only by software solutions, such as by installing the described system on existing servers or mobile devices.

Similarly, it should be noted that in order to simplify the expression of the disclosure of the present disclosure, thereby helping to understand one or more embodiments of the invention, in the foregoing description of the embodiments of the present disclosure, a plurality of features may sometimes be grouped into a single embodiment, figure, or description thereof. However, this disclosure approach does not imply that the subject matter of the present disclosure requires more features than those mentioned in the claims. In fact, features of an embodiment are fewer than all the features of a single embodiment disclosed above.

Finally, it should be understood that the embodiments described in the present disclosure are merely illustrative of the principles of the embodiments of the present disclosure. Other variations may also fall within the scope of the present disclosure. Therefore, by way of example and not by way of limitation, alternative configurations of the embodiments of the present disclosure may be considered consistent with the teachings of the present disclosure. Accordingly, the embodiments of the present disclosure are not limited to the embodiments expressly introduced and described in the present disclosure.

## Claims

1. A method for multi-stream multi-zone interaction, wherein the method is performed by a processor, comprising:
acquiring an audio source service item, a floor plan of a target region, and a device layout diagram, wherein the audio source service item includes an audio source and an audio source type;
determining a zone to be configured corresponding to a playback device based on the floor plan or the device layout diagram;
in response to an application operation on the audio source service item, determining at least one of a paired zone corresponding to the audio source service item or an application mode of the audio source service item in the paired zone; wherein the paired zone is the zone to be configured having a pairing relationship with the audio source service item, and the application mode includes a direct application or a mixing operation.

2. The method according to claim 1, wherein the determining the zone to be configured corresponding to the playback device based on the floor plan or the device layout diagram includes:
in response to a zone operation, determining the zone to be configured corresponding to the playback device based on the floor plan or the device layout diagram, wherein the zone operation includes a gesture operation of a user on the playback device.

3. The method according to claim 2, wherein the gesture operation includes a drag operation on the playback device, and the determining the zone to be configured corresponding to the playback device based on the floor plan or the device layout diagram includes:
in response to the drag operation of the user on the playback device on an interactive interface of a terminal device, determining the zone to be configured corresponding to the playback device.

4. The method according to claim 2, wherein the gesture operation further includes a link operation on the playback device, and the determining the zone to be configured corresponding to the playback device based on the floor plan or the device layout diagram further includes:
in response to the link operation of the user on the playback device on the interactive interface of the terminal device, determining the zone to be configured corresponding to the playback device.

5. The method according to claim 1, wherein the determining at least one of the paired zone corresponding to the audio source service item or the application mode of the audio source service item in the paired zone includes:
determining the paired zone corresponding to the audio source service item based on the gesture operation of the user on the audio source service item; and/or
determining the application mode of the audio source service item in the paired zone based on at least one of the gesture operation of the user on the audio source service item, a time for performing the gesture operation, the audio source type of the audio source service item, or a position where the user drags the audio source service item into the paired zone.

6. The method according to claim 1, wherein the determining the paired zone corresponding to the audio source service item includes:
acquiring a user input command based on the audio source service item, the zone to be configured, and an instruction input template; wherein the instruction input template includes at least one of a voice input template and a text input template, and the user input command includes at least one of a voice command and a text command; and
determining the paired zone corresponding to the audio source service item based on the user input command.

7. The method according to claim 1, wherein the determining the application mode of the audio source service item in the paired zone includes:
acquiring an application scenario set, wherein the application scenario set includes one or more of application scenarios of the zone to be configured; and
determining the application mode of the audio source service item in the paired zone based on the application scenario set, the audio source service item, and the paired zone corresponding to the audio source service item.

8. The method according to claim 7, wherein the determining the application mode of the audio source service item in the paired zone based on the application scenario set, the audio source service item, and the paired zone corresponding to the audio source service item includes:
in response to a duration between a setup time of the application scenario set and a current time being greater than a duration threshold, determining at least one recommended application mode of the audio source service item in the paired zone based on the paired zone corresponding to the audio source service item; and
determining the application mode of the audio source service item in the paired zone based on the at least one recommended application mode.

9. The method according to claim 8, wherein in response to the duration between the setup time of the application scenario set and the current time being greater than the duration threshold, the determining the at least one recommended application mode of the audio source service item in the paired zone based on the paired zone corresponding to the audio source service item includes:
determining a frequent mixing itemset of at least one of the zone to be configured corresponding to a plurality of playback devices based on historical data; and
determining the at least one recommended application mode based on the frequent mixing itemset of the at least one of the zone to be configured, the audio source service item, and the paired zone corresponding to the audio source service item.

10. The method according to claim 5, wherein the method further includes:
in response to the gesture operation of the user on the audio source service item being the drag operation, determining the application mode of the audio source service item in the paired zone based on a time of the user performing the gesture operation and a preset dragging time; wherein the preset dragging time is related to a user characteristic, and the user characteristic includes at least one of user basic information and user usage information.

11. A system for multi-stream multi-zone interaction, wherein the system includes a processor, and the system includes:
an acquisition module configured to acquire an audio source service item, a floor plan of a target region, and a device layout diagram, wherein the audio source service item includes an audio source and an audio source type;
a first determination module configured to determine a zone to be configured corresponding to a playback device based on the floor plan or the device layout diagram;
a second determination module configured to, in response to an application operation on the audio source service item, determine at least one of a paired zone corresponding to the audio source service item or an application mode of the audio source service item in the paired zone; wherein the paired zone is the zone to be configured having a pairing relationship with the audio source service item, and the application mode includes a direct application or a mixing operation.

12. The system according to claim 11, wherein the first determination module is further configured to:
in response to a zone operation, determine the zone to be configured corresponding to the playback device based on the floor plan or the device layout diagram, wherein the zone operation includes a gesture operation of a user on the playback device.

13. The system according to claim 12, wherein the gesture operation includes a drag operation on the playback device, and the first determination module is further configured to:
in response to the drag operation of the user on the playback device on an interactive interface of a terminal device, determine the zone to be configured corresponding to the playback device.

14. The system according to claim 11, wherein the second determination module is further configured to:
determine the paired zone corresponding to the audio source service item based on the gesture operation of the user on the audio source service item; and/or
determine the application mode of the audio source service item in the paired zone based on at least one of the gesture operation of the user on the audio source service item, a time for performing the gesture operation, the audio source type of the audio source service item, or a position where the user drags the audio source service item into the paired zone.

15. The system according to claim 11, wherein the first determination module is further configured to:
acquire a user input command based on the audio source service item, the zone to be configured, and an instruction input template; wherein the instruction input template includes at least one of a voice input template and a text input template, and the user input command includes at least one of a voice command and a text command; and
determine the paired zone corresponding to the audio source service item based on the user input command.

16. The system according to claim 11, wherein the second determination module is further configured to:
acquire an application scenario set, wherein the application scenario set includes one or more of application scenarios of the zone to be configured; and
determine the application mode of the audio source service item in the paired zone based on the application scenario set, the audio source service item, and the paired zone corresponding to the audio source service item.

17. The system according to claim 16, wherein the second determination module is further configured to:
in response to a duration between a setup time of the application scenario set and a current time being greater than a duration threshold, determine at least one recommended application mode of the audio source service item in the paired zone based on the paired zone corresponding to the audio source service item; and
determine the application mode of the audio source service item in the paired zone based on the at least one recommended application mode.

18. The system according to claim 17, wherein the second determination module is further configured to:
determine a frequent mixing itemset of at least one of the zone to be configured corresponding to a plurality of playback devices based on historical data; and
determine the at least one recommended application mode based on the frequent mixing itemset of the at least one of the zone to be configured, the audio source service item, and the paired zone corresponding to the audio source service item.

19. The system according to claim 14, wherein the second determination module is further configured to:
in response to the gesture operation of the user on the audio source service item being the drag operation, determine the application mode of the audio source service item in the paired zone based on a time of the user performing the gesture operation and a preset dragging time; wherein the preset dragging time is related to a user characteristic, and the user characteristic includes at least one of user basic information and user usage information.

20. A non-transitory computer-readable storage medium, comprising: computer instructions stored on the non-transitory computer-readable storage medium, wherein, when a computer reads the computer instructions, the computer is caused to execute a method for multi-stream multi-zone interaction according to any one of claims 1-10.
